# EUROPÄISCHE PATENTSCHRIFT

(11) **EP 2 570 222 B1**
(45) Veröffentlichungstag und Bekanntmachung des Hinweises auf die Patenterteilung: **23.06.2021**
(21) Anmeldenummer: 12184675.2
(22) Anmeldetag: 17.09.2012
(51) Int. Cl.: B23F 23/12, B24B 53/075

(54) **Schleifvorrichtung mit einem Abrichtprofilwerkzeug zum Abrichten von Schleifscheiben**
Grinding device equipped with a dressing tool for dressing grinding discs
Dispositif de meulage équipé d'un outil de profilage d'ajustement destiné à ajuster les meules

(30) Priorität: 16.09.2011 DE 102011053715
(43) Veröffentlichungstag der Anmeldung: 20.03.2013
(73) Patentinhaber: Präwema Antriebstechnik GmbH, 37269 Eschwege/Werra (DE)
(72) Erfinder: Holderbein, Walter, 37269 Eschwege (DE); Reinhardt, Jörg, 99826 Berka v.d.H. (DE)
(74) Vertreter: Cohausz & Florack

(56) Entgegenhaltungen:
- EP-A1- 1 312 445
- DE-A1- 19 910 746
- DE-A1- 19 910 747
- DE-A1-102004 020 947
- None

## Beschreibung

Die Erfindung betrifft eine Vorrichtung zum Schleifbearbeiten der Außen- oder Innenverzahnung von Werkstücken.

Aus KLOCKE: Fritz Klocke, Wilfried König "Fertigungsverfahren Schleifen, Läppen, Honen", 4. Auflage, Springer-Verlag Berlin Heidelberg, 2005, Seiten 171 - 173, ist es bekannt, dass ein in Folge hoher Schleifscheibenbelastungen nach kurzer Zeit eintretender Schleifscheibenverschleiß und die damit einhergehenden unzulässigen Profilabweichungen an der Schleifscheibe und damit am zu bearbeitenden Werkstück auf besonders wirtschaftliche Weise dadurch ausgeglichen werden können, dass mit Hilfe eines Abrichtprofilwerkzeugs, das als Abrichtprofilrolle ausgebildet ist, die mindestens so breit ist wie die jeweilige Schleifscheibe, das Schleifwerkzeug während der Bearbeitung abgerichtet wird. Auf diese Weise lässt sich das Profil der Schleifscheibe ständig regenerieren und so bei hohen Zerspanungsleistungen eine hohe Profilgenauigkeit erreichen. Des Weiteren kommen durch den fortlaufenden Abrichtvorgang immer neue scharfe Schneidkörner der Schleifscheibe zum Schleifeinsatz, wodurch sich die Zerspanleistungen weiter erhöhen.

Für das im laufenden Betrieb erfolgende Abrichten kann das Abrichtprofilwerkzeug bei der voranstehend erläuterten Vorgehensweise kontinuierlich im Eingriff mit der abzurichtenden Schleifscheibe gehalten werden oder es wird ein diskontinuierliches Abrichten durchgeführt, bei dem zwar ebenfalls während des Schleifens abgerichtet wird, jedoch nicht kontinuierlich, sondern nur nach bestimmten Zeitintervallen. Unabhängig davon, ob das Abrichten während der Schleifbearbeitung kontinuierlich oder diskontinuierlich durchgeführt wird, ist das mit einer Schleifscheibe während des Bearbeitungsprozesses maximal erreichbare Zerspanungsvolumen nur noch vom abrichtbaren Schleifscheibenvolumen abhängig, da für das Abrichten der Schleifscheibe keine zusätzlichen Zeiten benötigt werden.

Allerdings verringert sich der Durchmesser der Schleifscheibe im Schleifbetrieb in Folge des dabei unvermeidbaren Verschleißes stetig. Verstärkt wird dieser Verschleiß dadurch, dass auch beim Abrichten Material der Schleifscheibe abgetragen werden muss, um die geforderte Form des an der Schleifscheibe vorhandenen Profils abzubilden.

Als Werkzeuge zum Abrichten werden üblicherweise Abrichtprofilwerkzeuge oder Abrichtformwerkzeuge eingesetzt. Abhängig von der Gestaltung der jeweiligen Schleifmaschine wird das jeweilige Abrichtwerkzeug dabei entweder fest stehend, so dass die erforderliche Relativbewegung zwischen Abrichter und Schleifscheibe alleine von der Schleifscheibe ausgeführt wird, oder als drehend angetriebene Abrichterrolle eingesetzt, so dass während des Abrichtprozesses sowohl das jeweilige Abrichtwerkzeug als auch die Schleifscheibe in Bewegung sind.

Abrichtprofilwerkzeuge tragen ein Negativprofil der Schleifscheibe, wobei dieses Negativprofil abhängig von der jeweiligen Abrichtstrategie exakt oder mit einer bestimmten Abweichung an das Profil der Schleifscheibe angepasst ist. Durch radiale Zustellung bildet sich das Profil des Abrichtprofilwerkzeugs auf der Schleifscheibe ab. Der Vorteil von Abrichtprofilwerkzeugen, insbesondere Abrichtprofilrollen besteht dabei darin, dass mit ihnen hohe Abbildungsgenauigkeiten und kurze Abrichtzeiten erreicht werden können. Da Abrichtprofilwerkzeuge jedoch jeweils nur ein Verzahnungsprofil abbilden können, steht dieser hohen Effizienz eine geringe Flexibilität gegenüber. Deshalb werden Abrichtprofilwerkzeuge in der Regel in der Massenfertigung verwendet, bei der ausreichend große Stückzahlen zu verarbeiten sind.

Flexibler einsetzen lassen sich Abrichtformwerkzeuge. Diese sind an ihrem Umfang nach Art einer Schneide ausgebildet. Die an der Schleifscheibe abzubildende Profilform wird dabei durch eine entsprechende Bewegung des Abrichtformwerkzeugs entlang der vorgegebenen Kontur erzeugt. Auf diese Weise lassen sich mit einem Abrichtformwerkzeug unterschiedliche Profile erzeugen. Voraussetzung dazu ist allerdings, dass das Abrichtformwerkzeug in ausreichend vielen Freiheitsgraden mittels geeigneter Antriebe beweglich ist und eine Steuerung zur Verfügung steht, die die erforderlichen Bewegungen koordiniert. Der durch den Einsatz eines Abrichtformwerkzeugs gewonnenen Flexibilität stehen daher ein größerer maschineller Aufwand und längere Abrichtzeiten gegenüber [KLOCKE: Abschnitt 6.1.1.2]. Neben dem voranstehend erläuterten Stand der Technik sind aus der DE 199 10 747 A1 ein Verfahren und eine Vorrichtung zum Einmitten eines Abrichtwerkzeuges in die Ganglücke einer Schleifschnecke bekannt. Die dazu gemäß diesem Stand der Technik vorgesehene Vorrichtung umfasst als Abrichtwerkzeug eine Abrichtprofilrolle oder eine Radiusprofilrolle, wobei diese Rollen auch als so genannte Satzrolle ausgebildet sein können und das an der abzurichtenden Schleifschnecke abzubildende Profil in sich tragen. Ein solches Abrichtwerkzeug ist weder dazu ausgebildet noch dazu bestimmt oder in einer Weise beweglich, um nach Art einer Schneide alleine durch eine dem abzubildenden Profil folgende Bewegung des Abrichtwerkzeugs am abzurichtenden Werkzeug das betreffende Profil abzubilden.

Aus der EP 1 312 445 A1, die die Basis für den Oberbegriff des Anspruchs 1 bildet, ist zudem eine Vorrichtung zum Profilschleifen mit einer Schleifscheibe, einer Abrichtscheibe und mit einer Halterung zur Aufnahme und zum Fixieren eines zu bearbeitenden Werkstückes bekannt. Dabei weist die Vorrichtung Mittel auf, um eine Relativbewegung der Schleifscheibe bezüglich des zu bearbeitenden Werkstückes zu ermöglichen, um mit der Schleifscheibe an dem Werkstück einen Profilschleifvorgang durchführen zu können. Des Weiteren umfasst die Vorrichtung zusätzliche Mittel, um eine Relativbewegung der Abrichtscheibe bezüglich der Schleifscheibe zu ermöglichen, damit zeitgleich zu dem Profilschleifvorgang mit der Abrichtscheibe an der Schleifscheibe ein Abrichtvorgang durchgeführt werden kann.

Vor dem Hintergrund des voranstehend erläuterten Standes der Technik bestand die Aufgabe der Erfindung darin, eine Schleifvorrichtung zu nennen, die sich einerseits zur großtechnischen Bearbeitung von Werkstücken eignet, gleichzeitig aber auch die flexible Bearbeitung kleiner Losgrößen auf wirtschaftliche Weise erlaubt.

Erfindungsgemäß ist diese Aufgabe durch die in Anspruch 1 angegebene Vorrichtung gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Eine erfindungsgemäße Vorrichtung zum Schleifbearbeiten von einer als Außen- oder Innenverzahnung ausgebildeten Verzahnung eines Werkstücks umfasst dementsprechend eine um eine Werkzeugdrehachse rotierende Schleifscheibe, die mit einem an ihrem Umfang ausgeformten Profil durch Verstellung entlang einer quer zur Werkzeugdrehachse ausgerichteten Zustellachse in schleifenden Eingriff mit mindestens einem der jeweils eine Zahnlücke der Verzahnung begrenzenden Zähne des Werkstücks bringbar ist, und ein in Eingriff mit der Schleifscheibe bringbares Abrichtprofilwerkzeug, das so beschaffen ist, dass es auch als Formwerkzeug eingesetzt werden kann. Hierzu ist das Abrichtprofilwerkzeug an mindestens einer seiner freien Stirnseiten nach Art eines Formwerkzeugs ausgebildet.

Ein in einer erfindungsgemäßen Vorrichtung vorgesehenes Abrichtwerkzeug weist somit einerseits eine Rille auf, die im Querschnitt betrachtet an das Negativ des am Umfang der jeweils abzurichtenden Schleifscheibe abzubildenden Profils angepasst ist. Die Begrenzungsflächen der Rille sind dabei in an sich bekannter Weise mit für den Abrichtprozess ausreichend harten Partikeln, wie Diamantpartikeln oder desgleichen, besetzt. Im Fall, dass das Abrichtprofilwerkzeug als Abrichtprofilrolle ausgebildet ist, läuft die Rille um seinen Umfang um.

Andererseits ist das in einer erfindungsgemäßen Vorrichtung vorgesehene Abrichtwerkzeug mindestens in einem Randbereich seiner einen als Formwerkzeug dienenden Stirnseite mit ausreichend harten Partikeln besetzt. Diese Stirnseite des Abrichtprofilwerkzeugs dient - eine entsprechende Beweglichkeit und Steuerung der Lagerung des Abrichtprofilwerkzeugs in der jeweiligen Vorrichtung vorausgesetzt - nach Art eines reinen, aus dem Stand der Technik bekannten Formwerkzeugs, bei dem das an der abzurichtenden Schleifscheibe abzubildende Profil im Wesentlichen durch die Bewegung des Abrichtwerkzeugs, also hier des in erfindungsgemäßer Weise an einem Abrichtprofilwerkzeug zusätzlich ausgebildeten Formwerkzeugteils, entlang des Profils erzeugt wird.

Indem beide Stirnseiten des Abrichtprofilwerkzeugs in diesem Sinne als Formwerkzeug ausgestaltet sind, können beide Seiten des Schleifscheibenprofils bearbeitet werden, ohne dass dazu ein Umspannen und Umschwenken des Abrichtprofilwerkzeugs erforderlich ist.

Die Genauigkeit des Abrichtvorgangs lässt sich bei gleichzeitig einfacher Gestaltung der Schleifvorrichtung dadurch optimieren, dass die Schleifscheibe gemeinsam mit dem Abrichtprofilwerkzeug um eine Schwenkachse verschwenkbar ist, die achsparallel zu der Zustellachse ausgerichtet ist.

Eine besonders leistungsfähige Ausgestaltung einer erfindungsgemäßen Vorrichtung ist dabei dadurch gekennzeichnet, dass das Abrichtprofilwerkzeug als Abrichtprofilrolle ausgebildet ist, die um eine Abrichterachse rotierend angetrieben ist.

Durch den Einsatz eines Abrichtprofilwerkzeugs, das die Form des zu bearbeitenden Werkstücks hat, lassen sich mit einer in erfindungsgemäßer Weise ausgebildeten Vorrichtung große Stückzahlen von Werkstücken besonders zeitsparend und damit wirtschaftlich schleifbearbeiten.

Indem das in einer erfindungsgemäßen Vorrichtung vorgesehene Abrichtprofilwerkzeug an mindestens einer seiner freien Stirnseiten nach Art eines Formwerkzeugs ausgebildet ist, ist eine mit einem solchen Abrichtprofilwerkzeug ausgestattete erfindungsgemäße Vorrichtung gleichzeitig in der Lage, ohne größere Umbaumaßnahmen auch die Schleifbearbeitung kleinerer Losgrößen von Werkstücken vorzunehmen, ohne dass dazu ein spezialisiertes Abrichtwerkzeug gefertigt oder besondere Veränderungen an der Vorrichtung vorgenommen werden müssen.

Mit der Erfindung stehen somit ein Abrichtprofilwerkzeug und eine Schleifvorrichtung zur Verfügung, mit denen flexibel und mit hoher Wirtschaftlichkeit auf unterschiedliche Bearbeitungsanforderungen und betriebliche Anforderungen reagiert werden kann.

Nachfolgend wird die Erfindung anhand von Ausführungsbeispielen näher erläutert. Es zeigen:

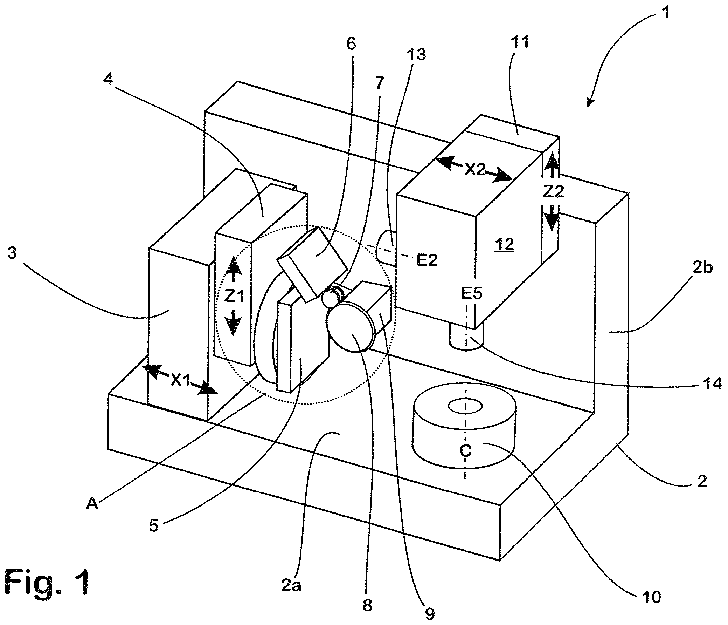

- Fig. 1: eine Vorrichtung zum Schleifbearbeiten der Außenverzahnung eines Zahnrads;

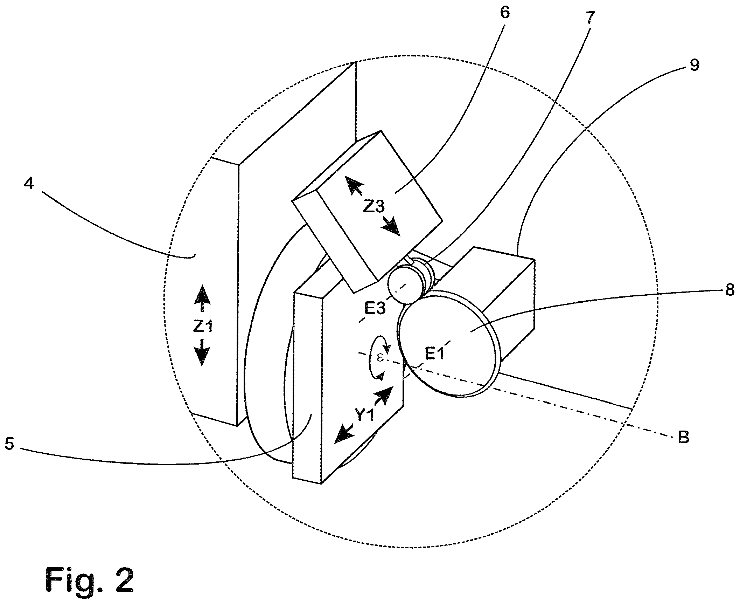

- Fig. 2: eine vergrößerte Darstellung des Ausschnitts A von Fig. 1;
- Fig. 3: ein Diagramm, in dem die Profilwinkelabweichung f_{Hα} über den jeweils aktuellen Durchmesser dₐ₀ einer Schleifscheibe aufgetragen ist;

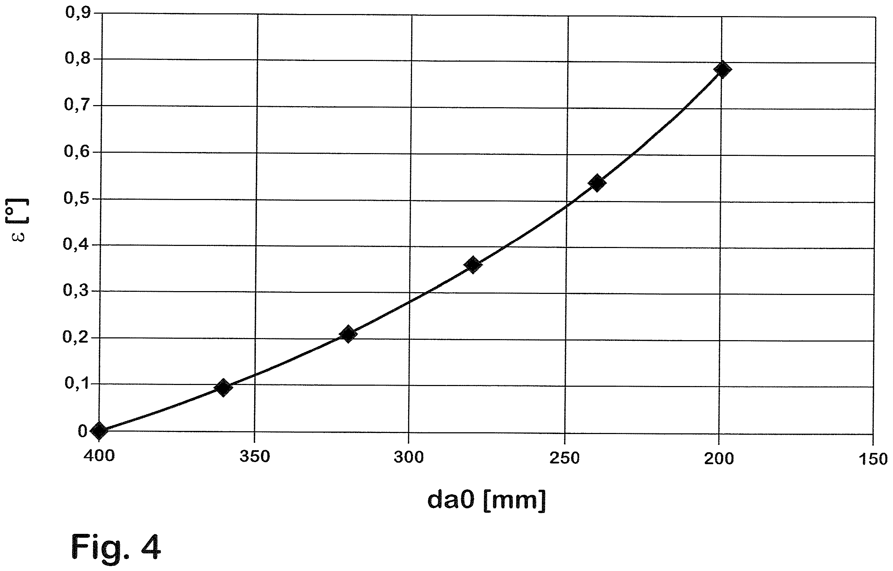

- Fig. 4: ein Diagramm, in dem der Schwenkwinkel ε über den jeweils aktuellen Durchmesser dₐ₀ einer Schleifscheibe aufgetragen ist;

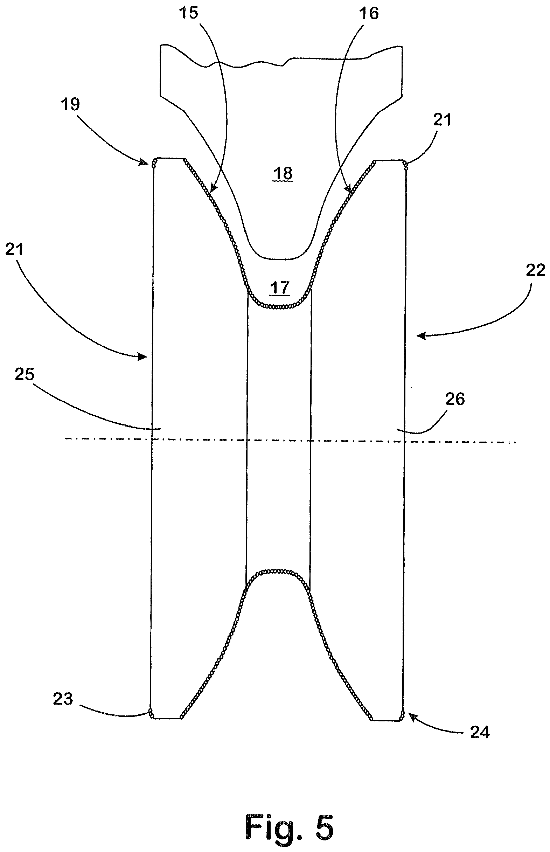

- Fig. 5: ein als Abrichtprofilrolle ausgebildetes Abrichtprofilwerkzeug in einer seitlichen Ansicht.

Die Vorrichtung 1 zum Schleifbearbeiten der Außenverzahnung eines außenverzahnten Zahnrads umfasst ein im Schnitt L-förmiges Maschinenbett 2, auf dessen horizontal ausgerichteten Abschnitt 2a ein Fahrständer 3 angeordnet ist, der mittels eines Stellmotors in einer horizontalen Zustellachse X1 entlang einer auf dem Maschinenbett 2 angeordneten, hier der Übersichtlichkeit halber nicht gezeigten Horizontalführung linear verfahrbar ist.

Der Fahrständer 3 trägt an seiner einen Stirnseite einen Support 4, der mittels eines Stellmotors entlang einer hier der Übersichtlichkeit halber ebenso nicht gezeigten, an der einen Stirnseite des Fahrständers 3 angeordneten Vertikalführung in eine senkrecht zur horizontalen Zustellachse X1 ausgerichtete vertikale Richtung Z1 linear verfahrbar ist.

An der vom Fahrständer 3 abgewandten Stirnseite des Supports 4 ist ein weiterer Support 5 angeordnet, der um eine achsparallel zur horizontalen Zustellachse X1 ausgerichtete Schwenkachse B schwenkbar und in eine orthogonal zur ersten horizontalen Zustellachse X1 ausgerichteten zweiten horizontalen Bewegungsrichtung Y1 linear verschiebbar ist.

Der Support 5 trägt einen Abrichtrollenträger 6, der entlang einer ebenfalls nicht gezeigten, an der Oberseite des Supports 5 angeordneten und nach oben und in Richtung des zweiten Supports 4 geneigten Führung in eine Bewegungsrichtung Z3 linear verschiebbar ist, deren Horizontalprojektion achsparallel zur horizontalen Zustellachse X1 und deren Vertikalprojektion achsparallel zur vertikalen Richtung Z1 ausgerichtet ist. Der Abrichtrollenträger 6 selbst trägt wiederum ein als Abrichtprofilrolle 7 ausgebildetes Abrichtprofilwerkzeug. Die Abrichtprofilrolle 7 ist durch einen von dem Abrichtrollenträger 6 ebenfalls getragenen, hier jedoch im Einzelnen nicht dargestellten Drehantrieb um eine quer zur horizontalen Zustellachse X1 ausgerichtete Abrichterachse E3 rotierend angetrieben.

Des Weiteren ist an dem um die Schwenkachse B verschwenkbaren Support 5 eine Schleifscheibe 8 gelagert, die von einem an der vom zweiten Support 4 abgewandten Stirnseite des dritten Supports 5 befestigten Drehantrieb 9 um eine achsparallel zur Drehachse E3 ausgerichtete Drehachse E1 rotierend angetrieben ist.

Im Bereich des von dem Fahrständer 3 abgewandten Endes des horizontalen Abschnitts 2a des Maschinenbetts 2 ist eine Werkstückaufnahme 10 vorgesehen, die um eine vertikal ausgerichtete Drehachse C angetrieben ist.

Im oberen Bereich des vertikal ausgerichteten Abschnitts 2b des Maschinenbetts 2 ist eine sich über die Breite B des Maschinenbetts 2 erstreckende, hier ebenfalls nicht gezeigte Linearführung ausgebildet, entlang der ein Zusatzsupport 11 in eine achsparallel zur horizontalen Zustellachse X1 ausgerichtete horizontale Bewegungsrichtung X2 verschiebbar ist. An dem Zusatzsupport 11 ist in einer achsparallel zur vertikalen Bewegungsrichtung Z1 ausgerichteten vertikalen Bewegungsrichtung Z2 ein verschiebbarer Antrieb 12 gelagert. Der Antrieb 12 treibt ein zusätzliches, an der der Werkstückaufnahme 10 zugeordneten Seite des Antriebs angeordnetes Schleifwerkzeug 13 um eine Drehachse E5 an, die achsparallel zur Drehachse C ausgerichtet ist. Darüber hinaus treibt der Antrieb 12 ein zweites zusätzliches Schleifwerkzeug 14 drehend an, das an der zum Fahrständer 3 ausgerichteten Seite des Antriebs 12 angeordnet ist.

Während die Schleifscheibe 8 zum Schleifen der die Zahnlücken des zu schleifenden Zahnrads jeweils begrenzenden Zahnflanken vorgesehen ist, können die zusätzlichen Schleifwerkzeuge 13,14 zum Schleifen der Stirnseiten oder anderer Abschnitte des betreffenden Zahnrads eingesetzt werden.

Die zum Abrichten der Schleifscheibe 8 vorgesehene Abrichtprofilrolle 7 begrenzt mit ihren stirnseitigen Flanken 15,16 eine zentral angeordnete umlaufende Rille 17, die das Negativprofil des am Umfang der Schleifscheibe 8 abzubildenden Profils 18 darstellt. Die in bekannter Weise mit Diamant- oder Hartstoffpartikeln besetzten, die Rille 17 begrenzenden Flanken 15,16 des Abrichtprofilrolle 7 sind dabei spiegelsymmetrisch zueinander so geformt, dass die Form der Rille 17 im Querschnitt der Form der Zahnlücke zwischen zwei Zähnen des jeweils schleifzubearbeitenden Zahnrads entspricht.

In ihren Umfangsrandbereichen 19,20 sind die Stirnseiten 21,22 der Abrichtprofilrolle 7 zusätzlich mit Diamant- oder Hartstoffpartikeln 23,24 belegt. Dabei sind die Umfangsrandbereiche 19,20 nach Art der Umfangsrandbereiche einer Formrolle ausgebildet, wie sie üblicherweise alleine, d.h. nicht in der erfindungsgemäß vorgesehenen Kombination mit einer Abrichtprofilrolle zum Abrichten eingesetzt werden.

Wird die Abrichtprofilrolle 7 im Sinne einer konventionellen Profilrolle eingesetzt, so wird die Abrichtprofilrolle 7 in Z3-Richtung auf die Schleifscheibe 8 bei rotierender Schleifscheibe 8 und rotierender Abrichtprofilrolle 7 zugestellt, bis das Profil 18 der Schleifscheibe 8 vollständig in der Rille 17 der Abrichtprofilrolle 7 sitzt, das Profil 18 also die durch die Form der Rille 17 vorgegebene Form angenommen hat. Die an den Stirnseiten 21,22 der Abrichtprofilrolle 7 ausgebildeten Formrollenteile 25,26 bleiben dabei ungenutzt.

Während die Abrichtprofilrolle 7 über die Form der ihre Rille 17 begrenzenden Flanken 15,16 das Profil 18 der Schleifscheibe 8 bestimmt, lässt sich mit den an den Stirnseiten 21,22 der Abrichtprofilrolle 7 ausgebildeten Formrollenteilen 25,26 die Form des an der Schleifscheibe 8 abzubildenden Profils 18 durch eine geeignete Bewegung der Abrichtprofilrolle 7 in die X1-,Z1-,Y1- und Z3-Richtung ebenfalls erzeugen. In diesem Fall befindet sich dann jeweils einer der Umfangsrandbereiche 19,20 in Eingriff mit der abzurichtenden Schleifscheibe 8, während die Rille 17 ungenutzt bleibt.

Zum Abrichten kann die Abrichtprofilrolle 7 durch geeignete Verstellung in Z3-Richtung während des Schleifbetriebes laufend in Eingriff mit der Schleifscheibe 8 gehalten oder in bestimmten Zeitabständen zum bei laufenden Schleifbetrieb durchgeführten Abrichten zeitweilig mit der Schleifscheibe in Kontakt gebracht werden.

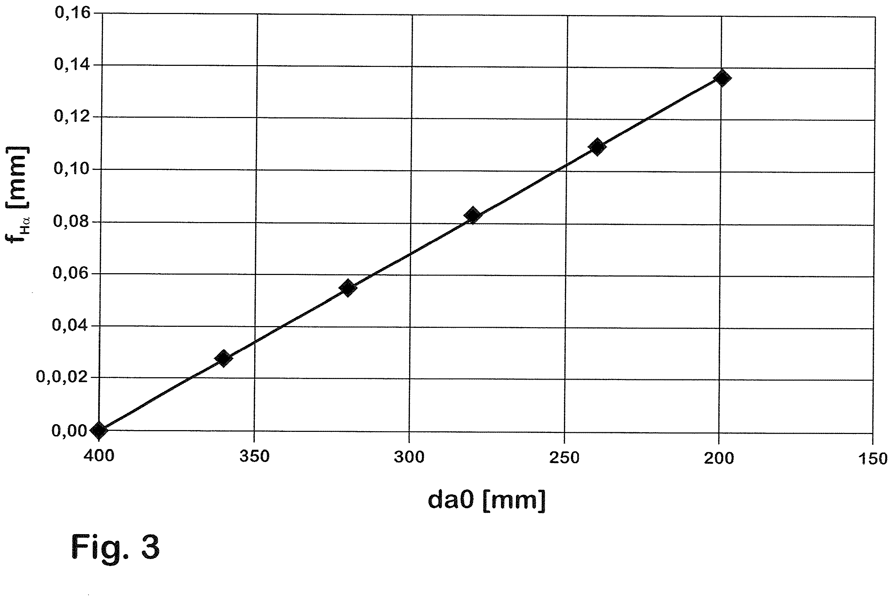

Der Durchmesser der Schleifscheibe 8 nimmt im Zuge der Schleifbearbeitung aufgrund unvermeidbaren Verschleißes laufend ab. Wie in Fig. 3 für eine Schleifscheibe, deren Durchmesser dₐ₀ im Neuzustand 400 mm betrug, dargestellt, ergibt sich mit zunehmender Durchmesserverringerung eine immer größere Profilwinkelabweichung f_{Hα}.

Diese Profilwinkelabweichung f_{Hα} kann durch eine Veränderung des Schwenkwinkels ε kompensiert werden, um den der Support 5 mit der von ihm getragenen Abrichtprofilrolle 7 und Schleifscheibe 8 um die Schwenkachse B verschwenkt sind. Ausgehend von der Schwenkstellung bei Neuzustand der Schleifscheibe 8 ist der Schwenkwinkel ε dabei zunehmend größer einzustellen.

In Tabelle 1 sind für eine Schleifscheibe 8 mit
- einem Normalmodul mₙ von 16 mm,
- einem Normaleingriffswinkel αₙ von 20°,
- einer Zähnezahl z von 20,
- einem Profilverschiebungsfaktor x von 0,5
   und
- einem Durchmesser dₐ₀ im Neuzustand von 400 mm,
bis zu einem Verschleißzustand, bei der der Durchmesser der Schleifscheibe 8 nur noch 200 mm beträgt, in fünf Stufen der jeweilige Durchmesser dₐ₀, die absolute Abnahme Δdₐ₀ des Durchmessers dₐ₀, die Profilwinkelabweichung f_{Hα}, der zur Kompensation der Profilwinkelabweichung f_{Hα} jeweils einzustellende, rechnerisch ermittelte Schwenkwinkel ε und die jeweilige absolute Änderung Δε des Schwenkwinkels ε angegeben.

**Tabelle 1**

| dₐ₀ [mm] | Δdₐ₀ [mm] | f_{Hα} [mm] | ε [°] | Δε [°] |
|---|---|---|---|---|
| 400 | 0 | 0 | 1, 68 | 0 |
| 360 | 40 | 0,028 | 1,78 | 0,10 |
| 320 | 80 | 0,055 | 1,90 | 0,22 |
| 280 | 120 | 0,083 | 2,04 | 0,36 |
| 240 | 160 | 0,11 | 2,22 | 0,54 |
| 200 | 200 | 0,137 | 2,47 | 0,79 |

### BEZUGSZEICHEN

- 1: Vorrichtung zum Schleifbearbeiten der Außenverzahnung des Werkstücks W
- 2: Maschinenbett
- 2a: horizontal ausgerichteter Abschnitt des Maschinenbetts 2
- 2b: vertikal ausgerichteter Abschnitt des Maschinenbetts 2
- 3: Fahrständer
- 4: Support
- 5: Support
- 6: Abrichtrollenträger
- 7: Abrichtprofilrolle
- 8: Schleifscheibe
- 9: Drehantrieb für die Schleifscheibe 8
- 10: Werkstückaufnahme
- 11: Zusatzsupport
- 12: Antrieb
- 13,14: Schleifwerkzeuge
- 15,16: Flanken der Abrichtprofilrolle 7
- 17: Rille
- 18: Profil
- 19,20: Umfangsrandbereiche
- 21,22: Stirnseiten der Abrichtprofilrolle 7
- 23,24: Diamant- oder Hartstoffpartikel
- 25,26: Formrollenteile der Abrichtprofilrolle 7
- ε: Schwenkwinkel
- B: Schwenkachse
- C: Drehachse der Werkstückaufnahme 10
- E1: Drehachse der Schleifscheibe 8
- E2: Drehachse des Schleifwerkzeugs 14
- E3: Abrichterachse
- E5: Drehachse des Schleifwerkzeugs 13
- X1: horizontal ausgerichtete Zustellachse
- X2: horizontal ausgerichtete Bewegungsrichtung
- Y1: orthogonal zur Zustellachse X1 und horizontal ausgerichtete Bewegungsrichtung
- Z1: vertikal ausgerichtete Bewegungsrichtung
- Z2: vertikal ausgerichtete Bewegungsrichtung
- Z3: schräg nach oben bzw. unten weisende Bewegungsrichtung

## Patentansprüche

1. Vorrichtung zum Schleifbearbeiten von einer als Außen- oder Innenverzahnung ausgebildeten Verzahnung eines Werkstücks, mit einer um eine Werkzeugdrehachse (E1) rotierenden Schleifscheibe (8), die mit einem an ihrem Umfang ausgeformten Profil durch Verstellung entlang einer quer zur Werkzeugdrehachse (E1) ausgerichteten Zustellachse (X1,Z3) in schleifenden Eingriff mit mindestens einem der jeweils eine Zahnlücke der Verzahnung begrenzenden Zähne des Werkstücks bringbar ist, und mit einem Abrichtprofilwerkzeug (7) zum Abrichten der Schleifscheibe, **dadurch gekennzeichnet, dass** das Abrichtprofilwerkzeug (7) an mindestens einer seiner freien Stirnseiten (21,22) nach Art eines Abrichtformwerkzeugs ausgebildet und in Eingriff mit der Schleifscheibe (8) bringbar ist.

2. Vorrichtung nach Anspruch 1, **dadurch gekennzeichnet, dass** beide Stirnseiten (21,22) des Abrichtprofilwerkzeugs (7) nach Art eines Abrichtformwerkzeugs ausgebildet sind.

3. Vorrichtung nach einem der Ansprüche 1 oder 2, **dadurch gekennzeichnet, dass** das Abrichtprofilwerkzeug (7) feststehend montiert ist.

4. Vorrichtung nach einem der voranstehenden Ansprüche, **dadurch gekennzeichnet, dass** das Abrichtprofilwerkzeug als Abrichtprofilrolle (7) ausgebildet ist, die um eine Abrichterachse (E3) rotierend angetrieben ist.

5. Vorrichtung nach einem der voranstehenden Ansprüche, **dadurch gekennzeichnet, dass** die Schleifscheibe (8) um eine Schwenkachse (B) verschwenkbar ist, die achsparallel zu der Zustellachse (X1) ausgerichtet ist.

6. Vorrichtung nach einem der voranstehenden Ansprüche, **dadurch gekennzeichnet, dass** das Abrichtprofilwerkzeug (7) und die Schleifscheibe (8) gemeinsam um die Schwenkachse (B) verschwenkbar sind.

## Claims

1. Device for grinding a toothing of a workpiece formed as an outer or inner toothing, with a grinding disc (8) rotating about a tool rotational axis (E1), which can be moved, with a profile formed on its circumference, into grinding engagement with at least one of the teeth of the workpiece, which each delimit a tooth spacing of the toothing, by adjusting along an infeed axis (X1, Z3) aligned transverse to the tool rotational axis (E1), and with a dressing profile tool (7) for dressing the grinding disc, **characterised in that** the dressing profile tool (7) is formed on at least one of its free end faces (21, 22) in the manner of a dressing moulding tool and can be moved into engagement with the grinding disc (8).

2. Device according to claim 1, **characterised in that** both end faces (21, 22) of the dressing profile tool (7) are formed in the manner of a dressing moulding tool.

3. Device according to any one of claims 1 or 2, **characterised in that** the dressing profile tool (7) is fixedly mounted.

4. Device according to any one of the preceding claims, **characterised in that** the dressing profile tool is formed as a dressing profile roller (7) which is driven so as to rotate about a dresser axis (E3).

5. Device according to any one of the preceding claims, **characterised in that** the grinding disc (8) is pivotable about a pivot axis (B) which is aligned axially parallel to the infeed axis (X1).

6. Device according to any one of the preceding claims, **characterised in that** the dressing profile tool (7) and the grinding disc (8) are together pivotable about the pivot axis (B).

## Revendications

1. Dispositif pour rectifier une denture d'une pièce sous forme de dents externes ou internes,
- avec une meule (8) en rotation autour d'un axe de rotation d'outil (E1), laquelle meule peut être mise en prise par meulage, via un profil formé sur sa circonférence, avec au moins une des dents de la denture de la pièce délimitant respectivement une entredent, par un déplacement le long d'un axe d'avance (X1, Z3) orienté transversalement à l'axe de rotation d'outil (E1), et
- avec un outil de dressage de profil (7) pour le dressage de la meule, **caractérisé**
- **en ce que** l'outil de dressage de profil (7) est formé au niveau d'au moins une de ses faces frontales libres (21, 22) à la manière d'un outil de dressage de forme et peut être mis en prise avec la meule (8).

2. Dispositif selon la revendication 1, **caractérisé en ce que** les deux faces frontales (21, 22) de l'outil de dressage de profil (7) sont conçues à la manière d'un outil de dressage de forme.

3. Dispositif selon l'une des revendications 1 ou 2, **caractérisé en ce que** l'outil de dressage de profil (7) est monté de manière fixe.

4. Dispositif selon l'une des revendications précédentes, **caractérisé en ce que** l'outil de dressage de profil est conçu comme un rouleau de dressage de profil (7) qui est entraîné en rotation autour d'un axe de dressage (E3).

5. Dispositif selon l'une des revendications précédentes, **caractérisé en ce que** la meule (8) est pivotable autour d'un axe de pivotement (B) qui est aligné axialement parallèle à l'axe d'avance (X1).

6. Dispositif selon l'une des revendications précédentes, **caractérisé en ce que** l'outil de dressage de profil (7) et la meule (8) peuvent pivoter conjointement autour de l'axe de pivotement (B).
